# EUROPEAN PATENT SPECIFICATION

(11) **EP 3 415 787 B1**
(45) Date of publication and mention of the grant of the patent: **02.10.2019**
(21) Application number: 18177470.4
(22) Date of filing: 13.06.2018
(51) Int. Cl.: F16F 9/46, F16F 9/516, F16F 9/06

(54) **SHOCK ABSORBER WITH ADJUSTABLE COMPRESSION AND REBOUND**
STOSSDÄMPFER MIT EINSTELLBARER ZUG- UND DRUCKSTUFENDÄMPFUNG
AMORTISSEUR RÉGLABLE EN COMPRESSION ET DÉTENTE

(30) Priority: 15.06.2017 IT 201700066407
(43) Date of publication of application: 19.12.2018
(73) Proprietor: FORMULA S.A.S. DI "FORMULA GROUP S.R.L." & C., 59100 Prato (PO) (IT)
(72) Inventor: Fiorenzi, Daniele, 21050 Cairate (VA) (IT)
(74) Representative: Nesti, Antonio

(56) References cited:
- EP-A2- 0 855 533
- US-A1- 2011 174 582
- US-A1- 2013 105 260

## Description

### Technical Field

The invention relates to a shock absorber for double adjustable vehicles, both in the compression phase and in the rebound, or extension, phase.

In particular, the invention relates to a compact and lightweight shock absorber intended for motorcycles and bicycles.

### Background

At present, solutions with double compression and rebound adjustment are already known, for example from US 2011/174582 A1.

In its conventional configuration, a double adjustable shock absorber is provided with a sliding piston, against the return thrust of a spring, between an upper chamber and a lower chamber of a cylinder filled with oil.

In the compression phase, the piston compresses the oil present in the lower chamber of the cylinder, which is forced to pass into an external adjustment chamber, generally located downstream of a compensating assembly.

In the extension phase, an adjustment rod is then provided, running inside the piston stem and can be actuated by means of an external knob for adjusting the width of the return oil passage from the upper chamber, which in this extension phase bypasses the sliding piston of the shock absorber to flood the lower chamber again.

The solutions of the known type have some drawbacks due to the size of the compression adjustment chambers, placed outside the body of the shock absorber. A further drawback is the low efficiency in adjusting the distension phase for low speeds.

### Object of the Invention

The present invention is intended to overcome the drawbacks of the already known solutions and to propose a compact shock absorber, provided with adjustment of the extension and compression phases for high speeds.

A further object is to propose a shock absorber provided with adjustment of the extension and compression phases for low speeds.

A further object is to propose a shock absorber provided with independent adjustment of the compression and extension phases.

### Summary of the Invention

These objects have been achieved by developing a shock absorber according to at least one of the appended claims.

A first advantage consists in the fact that the compression adjustment assembly is placed within the shock absorber cylinder, reducing both the external size and the risk of damage.

A second advantage of the invention consists in the fact that the adjustment of the extension phase for low speeds is also made possible.

A further advantage is that the adjustment of the extension phase at low speed does not affect the adjustment of the compression phase at low speeds.

### List of Drawings

These and other advantages will be better understood by anyone skilled in the art from the following description and the accompanying drawings, given as a nonlimiting example, wherein:
figs. 1-4 show a partial view of an embodiment of a shock absorber of the invention in the compression phase;
figs. 5-6 show the shock absorber of fig. 1 in the extension phase;
figs. 7a-7c show a side, top and bottom views of a sliding piston of the shock absorber of fig. 1, respectively;
fig. 8 shows a complete side view of the shock absorber of the invention in cross section.

### Detailed Description

With reference to the attached drawings, a preferred embodiment of a shock absorber for vehicles according to the invention is described.

The shock absorber comprising a sealingly sliding piston 1, *e.g.* by means of a peripheral seal 35, in a cylinder 5 full of oil and provided at an outer end with an attachment 11 intended in use to attach to a wheel of a vehicle, preferably the wheel of a motorcycle.

The piston 1 is carried by a rod 8 equipped at its outer end with an attachment 10 intended in use to connect to the frame of a vehicle and, due to an external stress between the attachments 10 and 11, can perform a compression stroke against the return thrust of a spring 2, *e.g.* a helical spring, and therefore a reverse extension stroke in favour of the thrust of the return spring, after the prevalence of the external stress.

During sliding, the position of the piston in the cylinder defines an upper chamber 3 and a lower chamber 4.

To allow an adjustment of the extension phase, the shock absorber comprises first adjustment means for adjusting the oil passage through ducts 6, through which an oil passage between the upper chamber and the lower chamber occurs, in particular as a result of relatively modest stresses, hence generally referred to as adjustment means at low speeds.

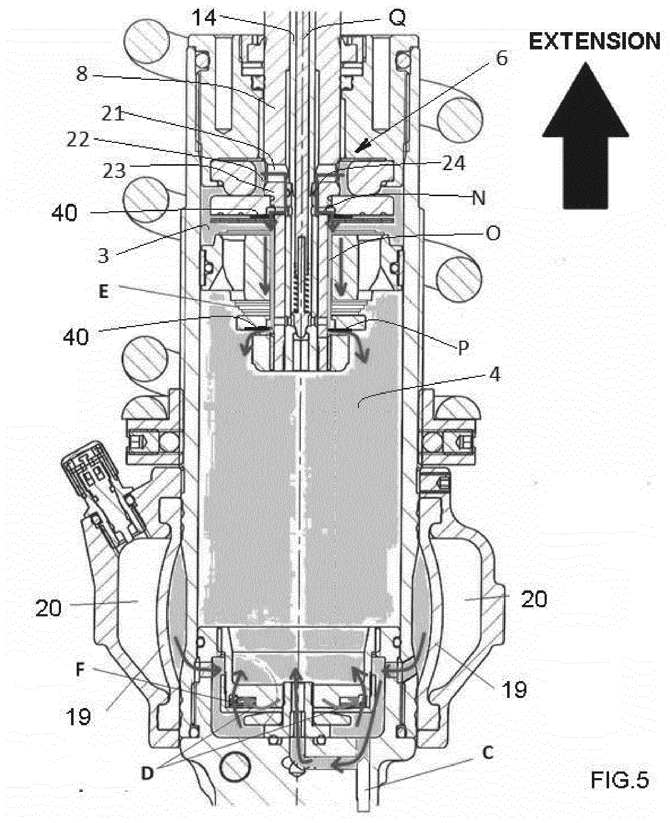

Fig. 5 shows in detail the path followed by the oil through the ducts 6 in the extension phase.

In the described example, the ducts 6 comprise circumferential holes 21 of the rod 8 arranged in an adjustable position with respect to a first gap 22 between the rod 8 and an outer ring 23, first axial passages 24 arranged between the stem and the piston-bearing rod, in turn communicating with the gap 22 and with first radial passages N communicating with the upper chamber 3, and finally second axial passages "O" between the piston-bearing rod and the piston, communicating with the upper chamber 3 and with second radial passages P communicating with the lower chamber 4.

The first adjustment means of the ducts 6 comprise, instead, a knob H accessible externally to the cylinder 2, configured to move the hollow stem 14 inside the rod 8 and thus vary the oil passage surface through the gap 22.

Advantageously, in the described embodiment, the adjusted oil does not return to the lower chamber 4 freely, but passes through the holes N, falls from the passages "O" created between the piston-bearing rod and the piston and enters the chamber 4 from the passages P passing through one or more unidirectional valves 40, *e.g*. reed valves.

This causes the extension and compression adjustments to be completely separate from each other, and it prevents that, upon the recording of the adjustment during the extension phase, also the compression one is affected.

According to the invention, the shock absorber comprises second unidirectional adjustment means arranged inside the cylinder 5 and manoeuvrable outside the cylinder 5 to adjust an oil passage through second ducts 13 extending from the lower chamber 4 to the upper chamber 3 and active in the compression strokes.

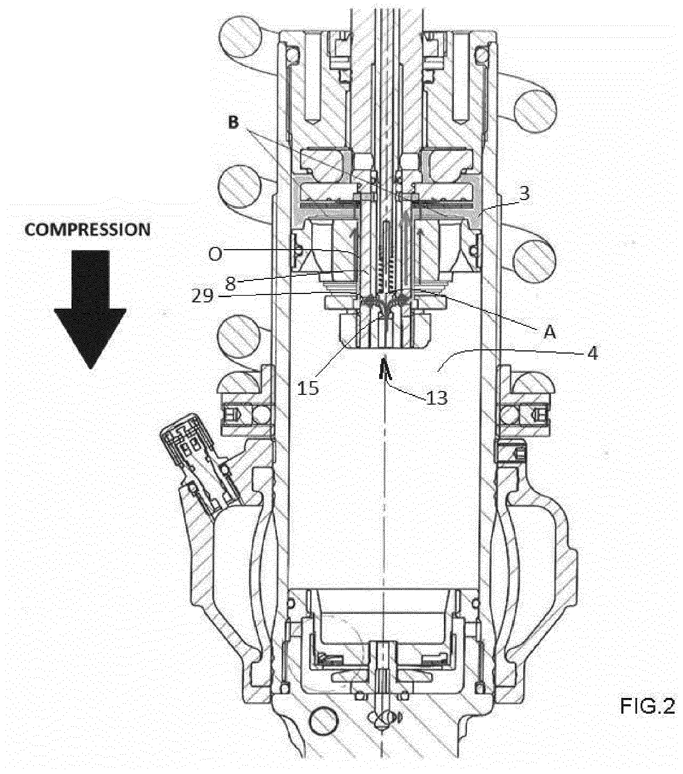

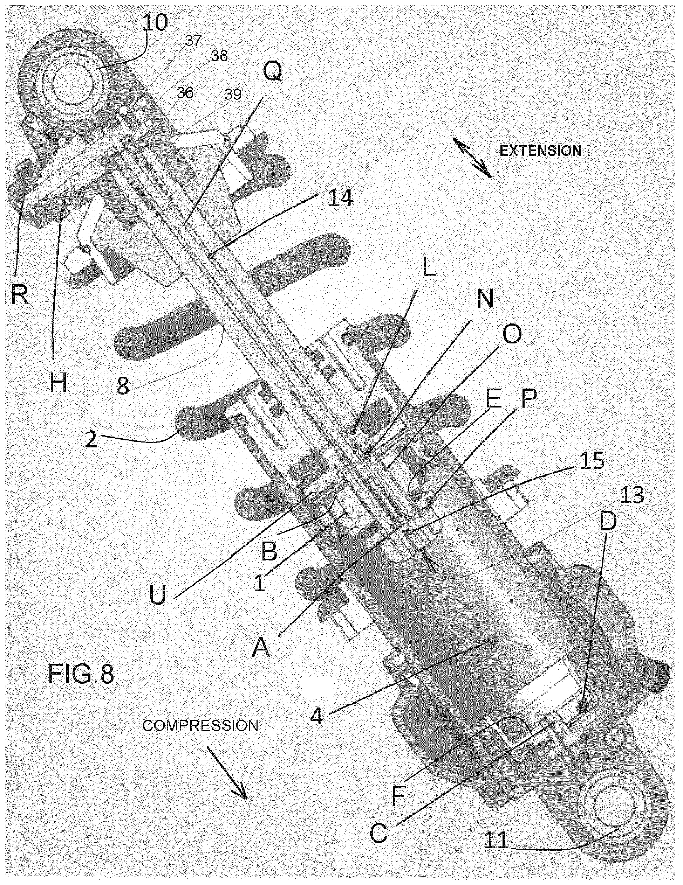

With reference to the illustrated preferred embodiment, and in particular to figs. 2 and 8, the second adjustment means comprise a pin A connected to a stem Q arranged inside a cavity 14 of the piston-bearing rod 8 and which is normally pushed to close an opening 15 of the ducts 13 by a spring.

To carry out the adjustment, the pin A is movable with an amplitude adjustable by means of a regulator R (visible in fig.8) externally accessible to move axially by means of a cam 38 the stem Q and thus determine a maximum oil passage surface through the opening 15 in response to a thrust received by compressed oil in a piston compression stroke.

Preferably, the ducts 13 comprise radial holes 29 of the rod 8 communicating with the adjustable opening 15 and with axial passages O arranged between the rod 8 and the piston 1 and, in turn, communicating with the upper chamber 3.

According to the invention, the shock absorber further comprises third adjustment means configured to regulate in the compression phase an oil passage from the lower chamber 4 to a compression adjustment chamber 17 arranged concentrically with the cylinder 2.

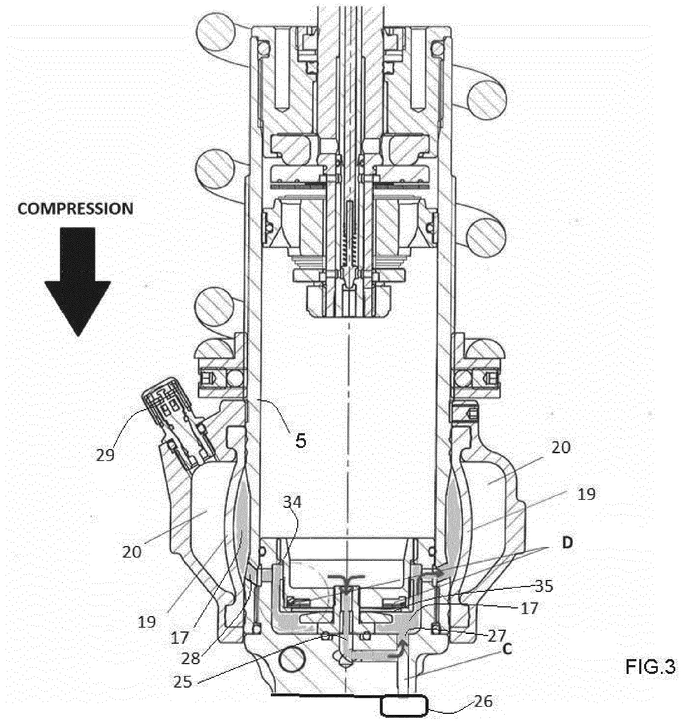

In the example shown especially in figure 3, the adjustment chamber 17 is at least partially delimited by an elastic membrane 19 contained within a compensating chamber 20 loaded with a pressure gas adjustable by means of a valve 29.

Still with reference to the example of figure 3, in greater detail, the third regulation means comprise a duct 25 communicating with the lower chamber 4 and the adjustment chamber 17, and a pin C movable in an adjustable manner by means of an external knob 26 for adjusting a passage opening 27 of the duct 25.

Preferably, the shock absorber according to the invention further comprises at least one unidirectional compression valve "B" for oil passage from the lower chamber to the upper chamber in response to an oil pressure in the compression phase which is above a predetermined threshold and at least one unidirectional extension valve "E" for oil passage from the upper chamber to the lower chamber in response to an oil pressure in the extension phase which is above a predetermined threshold.

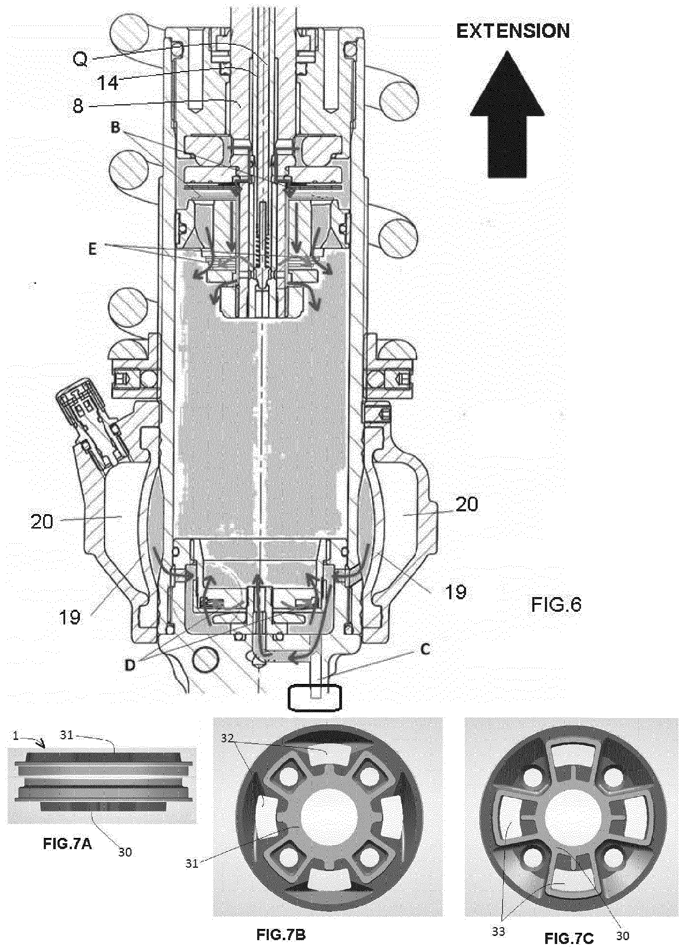

Figure 7 illustrates an exemplary embodiment in which the first and second unidirectional valve "B", "E" are reed valves mounted on opposite faces 30, 31 of the piston 1 to close the respective passages 32, 33, so as to intervene alternately during the compression phase and during the extension phase.

Moreover, the shock absorber may comprise a further unidirectional valve "D" arranged between the lower chamber and the adjustment chamber for oil passage from the lower chamber to the adjustment chamber in response to a pressure of oil in the compression phase which is above a predetermined threshold.

In the example shown in figure 3, the valve "D" is a reed valve mounted on a closure bottom 34 of the cylinder 5 for closing a passage 35 towards the adjustment chamber 17.

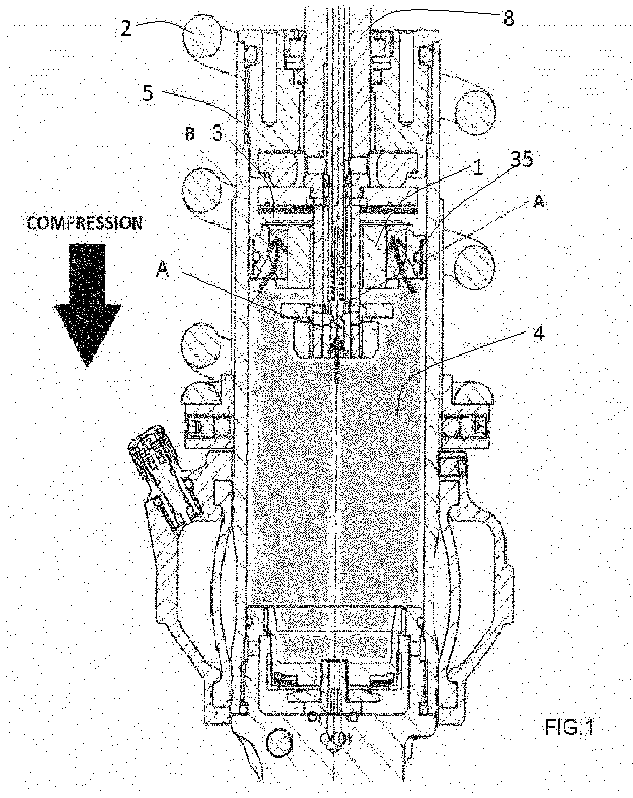

With particular reference to figs. 1-6, the operation of the shock absorber is now described in the various extension and compression phases in the presence of low or medium/high speeds.

The shock absorber works in the compression and extension phases, at high and low speeds, by taking advantage of the various adjustments described above, which intervene as a function of the pressure exerted by the fluid on the various components of the shock absorber.

At low compression speeds, the upper adjustment is activated by means of the knob R, and a lower one by means of the knob 26.

Advantageously, the shock absorber of the invention therefore comprises a sensitivity adjustment at low compression speeds, controlled by an adjustment pin A coaxial to the adjustment stem 14 which intervenes in the extension phase, and third compression adjustment means at high speeds placed inside the radial size of the main cylinder of the shock absorber.

In detail:
At low speeds, the oil moves occupying certain areas (marked in yellow) starting from the lower main chamber 4, through the movement represented by the red arrows in figure 1.

At low speeds, the oil pressure is not sufficient to open the reed assembly B, which stops the oil passage to the upper chamber 3.

On the contrary, at the central area the pin A receives an upward thrust sufficient to make it go up along the rod 8 of the shock absorber and to allow the oil passage as in figure 2.

The spin A goes up as shown by the green arrow, clearing the radial 29 and axial passages "O" through which the oil goes up to fill the upper chamber 3.

At the same time, the other adjustment at low speeds, illustrated in particular in figure 3 with reference to the lower part of the shock absorber, is working.

In the presence of low speeds, the reed assembly D, without a pressure sufficient to overcome the opening threshold of the unidirectional valve, blocks the direct passage from the lower chamber of the piston to the adjustment chamber 17 delimited by the elastic membrane 19, forcing the oil passage from the central cavity 25, also indicated by the double arrow.

The pin C, adjustable in height, adjusts the passage 27 towards the chamber of the membrane which is subjected to the counterthrust of the external cavity filled with pressurized gas.

If the speed increases, the oil pressure also increases, which allows the shock absorber to exploit the adjustments at high speeds.

In this case, the oil passage ducts at low speeds 6, 13 get saturated, forcing the opening of the reed assemblies B and D described above and active in the compression phase.

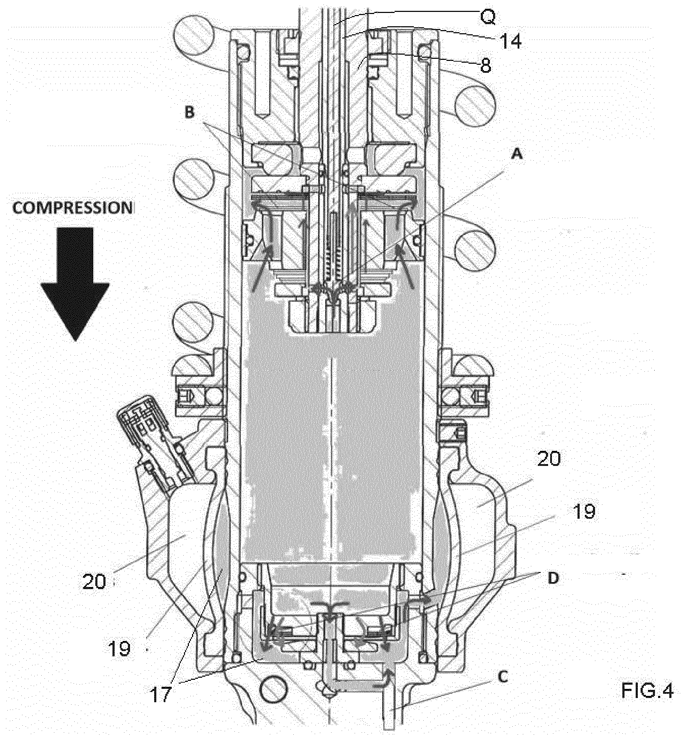

In particular, in the upper area, the opening of the lamellar group B allows direct passage into the upper chamber of the piston, while in the lower one the reed assembly D enables the direct passage into the chamber 17 delimited by the elastic membrane 19 (fig.4).

On the other hand, in the extension phase, the opposed movements with respect to the compression phase are performed.

At low speeds (fig.5 and fig.8), the oil which is in the upper chamber passes through the holes 21 of the rod 8, and according to the size of the gap 22 regulated by the knob H and the position of the hollow stem 14 compared to a conical adjuster 23, more or less oil passes into the lower chamber.

In the described example, the knob H moves the hollow stem 14 by means of a thrust cam 37 which acts against the effect of a return spring 39 housed in the piston-bearing rod.

At the same time, due to the vacuum created by the sliding piston in the lower chamber and by the counterthrust of the gas on the membrane 19, the oil compresses the valve F of the reed assembly D returning to the central lower chamber, passing also minimally through the passage from the pin C.

At medium and high extension speeds, the oil pressure of the upper chamber can open the reed assembly E, passing it into the lower chamber of the piston (fig.6).

In figure 7, it is shown how the sliding piston 1 placed between the extension reed assembly E and the compression one B serves as a passage vehicle both during compression and during extension, exploiting the different arrangement of the reed assemblies, which close the passages 32, 33 created in the thickness of the piston. The movement of the oil is then alternately stopped and allowed, depending on whether the shock absorber is in the extension or compression phase.

The invention has been described with reference to a preferred embodiment, but it is understood that equivalent modifications may be made without departing from the scope of protection granted to the present industrial property right.

## Claims

1. Shock absorber for motorcycles and bicycles, comprising
a sealingly sliding piston (1) in a cylinder (5) full of oil in a compression stroke against the return thrust of a spring (2) and in a reverse extension stroke for said return thrust,
a piston-bearing rod (8),
a first external attachment (10) integral with the rod (8),
a second external attachment (11) integral with the cylinder (5),
wherein the position of said sliding piston in the cylinder defines an upper chamber (3) and a lower chamber (4) of the cylinder,
first adjustment means for adjusting the oil passage through first oil passage ducts (6) between the upper chamber and the lower chamber in an extension stroke,
second unidirectional adjustment means arranged inside the cylinder (5) and manoeuvrable outside the cylinder (5) to adjust an oil passage through second ducts (13) from the lower chamber (4) to the upper chamber (3) in a compression stroke.
**Characterized in that** it comprises third adjustment means for adjusting an oil passage from the lower chamber (4) to a compression adjustment chamber (17) in a compression stroke, said adjustment chamber (17) being arranged concentrically on said cylinder (5).

2. Shock absorber according to claim 1, wherein said compression adjustment chamber is at least partially delimited by a contained elastic membrane (19) provided within a compensating chamber (20) loaded with a pressure gas adjustable by means of a valve (29).

3. Shock absorber according to claim 1, wherein said third adjustment means comprise
a duct (25) communicating with the lower chamber (4) and the adjustment chamber (17)
a pin (C) movable in an adjustable manner by means of an external knob (26) for adjusting a passage span (27) of the duct (25).

4. Shock absorber according to one of the preceding claims, comprising at least one unidirectional valve (D) arranged between the lower chamber and the adjustment chamber, for example of reed type, for oil passage from the lower chamber to the adjustment chamber in response to a pressure of oil in the compression phase which is above a predetermined threshold.

5. Shock absorber according to claim 4, wherein said unidirectional valve (D) is a reed valve mounted on a closure bottom (34) of the cylinder (5) for closing a passage (35) towards the adjustment chamber (17).

6. Shock absorber according to claim 1, wherein said second adjustment means comprise a pin (A) connected to a stem (Q) disposed within said rod (8) and normally pushed in the closure of an opening (15) of said second ducts by a spring, the pin (A) being movable of an amplitude adjustable by means of an externally accessible adjuster (R) for axially shifting the stem (Q) and determining a maximum oil passage surface through said opening (15) in response to a thrust received from compressed oil in a piston compression stroke.

7. Shock absorber according to claim 6, wherein said second ducts (13) comprise radial holes (29) of the rod (8) communicating with said adjustable opening (15) and with axial passages (O) arranged between the rod (8) and the piston (1) and, in turn, communicating with the upper chamber (3).

8. Shock absorber according to one of the preceding claims, wherein said first ducts (6) comprise
circumferential holes (21) of the rod (8) arranged in an adjustable position with respect to a first gap (22) between the rod (8) and a conical adjuster (23),
first axial passages (24) arranged between the stem and the piston-bearing rod, in turn communicating with the gap (22) and with first radial passages (N) communicating with the upper chamber (3),
second axial passages (O) between the piston-bearing rod and the piston, communicating with the upper chamber (3) and second radial passages (P) communicating with the lower chamber (4), and wherein
said first adjustment means comprise a knob (H) accessible externally to the cylinder (5), configured to move a hollow stem (14) sliding into said piston-bearing rod (8) and varying the oil passage surface through the gap (22) and at least one unidirectional valve (40) open in the extension phase.

9. Shock absorber according to one of the preceding claims, comprising at least one first unidirectional compression valve (B) for oil passage from the lower chamber to the upper chamber in response to an oil pressure in a compression phase which is above a predetermined threshold and at least one second unidirectional extension valve (E) for oil passage from the upper chamber to the lower chamber in response to an oil pressure in the extension phase which is above a predetermined threshold.

10. Shock absorber according to claim 9, wherein said first and second unidirectional valves are reed valves mounted on opposed faces (30, 31) of the piston (1) for closing respective passages (32, 33).

## Patentansprüche

1. Stoßfänger für Krafträder und Fahrräder, der einen abdichtend gleitenden Kolben (1) in einem Zylinder (5) voll von Öl in einem Kompressionshub gegen den Rückkehrschub einer Feder (2) und in einem umgekehrten Ausfahrhub für den Rückkehrschub umfasst,
eine Kolbentragstange (8),
eine erste externe Halterung (10) integral mit der Stange (8),
eine zweite externe Halterung (11) integral mit dem Zylinder (5),
wobei die Position des gleitenden Kolbens in dem Zylinder eine obere Kammer (3) und eine untere Kammer (4) des Zylinders definiert,
erste Einstellmittel zum Einstellen der Ölpassage durch erste Ölpassageleitungen (6) zwischen der oberen Kammer und der unteren Kammer in einem Ausfahrhub,
zweite Einrichtungseinstellmittel, die innerhalb des Zylinders (5) eingerichtet und außerhalb des Zylinders (5) betätigbar sind, um eine Ölpassage durch zweite Leitungen (13) von der unteren Kammer (4) zu der oberen Kammer (3) in einem Kompressionshub einzustellen,
**dadurch gekennzeichnet, dass** er dritte Einstellmittel zum Einstellen einer Ölpassage von der unteren Kammer (4) zu einer Kompressionseinstellkammer (17) in einem Kompressionshub umfasst, wobei die Einstellkammer (17) konzentrisch auf dem Zylinder (5) eingerichtet ist.

2. Stoßfänger nach Anspruch 1, wobei die Kompressionseinstellkammer mindestens teilweise von einer geschlossenen elastischen Membran (19) abgegrenzt ist, die innerhalb einer Kompensationskammer (20) vorgesehen ist, die mit einem Druckgas beladen ist, das mittels eines Ventils (29) einstellbar ist.

3. Stoßfänger nach Anspruch 1, wobei das dritte Einstellmittel eine Leitung (25) umfasst, die mit der unteren Kammer (4) und der Einstellkammer (17) in Kommunikation steht,
einen Stift (C), der auf eine einstellbare Art mittels eines externen Knaufs (26) einstellbar ist, um eine Passagenweite (27) der Leitung (25) einzustellen.

4. Stoßfänger nach einem der vorstehenden Ansprüche, der mindestens ein Einrichtungsventil (D) umfasst, das zwischen der unteren Kammer und der Einstellkammer eingerichtet ist, zum Beispiel vom Reed-Ventiltyp, für Ölpassage von der unteren Kammer zu der Einstellkammer als Reaktion auf einen Öldruck in der Kompressionsphase, der oberhalb eines vorbestimmten Schwellenwerts liegt.

5. Stoßfänger nach Anspruch 4, wobei das Einrichtungsventil (D) ein Reed-Ventil ist, das auf einen Verschlussboden (34) des Zylinders (5) zum Schließen einer Passage (35) zu der Einstellkammer (17) montiert ist.

6. Stoßfänger nach Anspruch 1, wobei das zweite Einstellmittel einen Stift (A) umfasst, der mit einem Stiel (Q) verbunden ist, der innerhalb der Stange (8) angeordnet ist und normal in den Verschluss einer Öffnung (15) der zweiten Leitungen von einer Feder geschoben wird, wobei der Stift (A) um eine Amplitude bewegbar ist, die mittels eines extern zugänglichen Einstellers (R) einstellbar ist, um den Stiel (Q) axial zu verlagern und eine maximale Ölpassageoberfläche durch die Öffnung (15) als Reaktion auf einen Schub, der von komprimiertem Öl in einem Kolbenkompressionshub empfangen wird, zu bestimmen.

7. Stoßfänger nach Anspruch 6, wobei die zweiten Leitungen (13) radiale Bohrungen (29) der Stange (8) umfassen, die mit der einstellbaren Öffnung (15) in Kommunikation stehen, und mit axialen Passagen (0), die zwischen der Stange (8) und dem Kolben (1) eingerichtet sind und ihrerseits mit der oberen Kammer (3) in Kommunikation stehen.

8. Stoßfänger nach einem der vorstehenden Ansprüche, wobei die ersten Leitungen (6) umfängliche Bohrungen (21) der Stange (8) umfassen, die in einer einstellbaren Position bezüglich einer ersten Spalte (22) zwischen der Stange (8) und einem konischen Einsteller (23) eingerichtet sind,
erste axiale Passagen (24), die zwischen dem Stiel und der Kolbentragstange eingerichtet sind, die ihrerseits mit der Spalte (22) in Kommunikation stehen, und mit ersten radialen Passagen (N), die mit der oberen Kammer (3) in Kommunikation stehen,
zweite axiale Passagen (O) zwischen der Kolbentragstange und dem Kolben, die mit der oberen Kammer (3) in Kommunikation stehen, und zweite radiale Passagen (P), die mit der unteren Kammer (4) in Kommunikation stehen, und wobei
das erste Einstellmittel einen Knauf (H) umfasst, der außerhalb des Zylinders (5) zugänglich ist, der ausgelegt ist, um einen Hohlstiel (14), der in der Kolbentragstange (8) gleitet, zu bewegen und die Ölpassageoberfläche durch die Spalte (22) zu variieren, und mindestens ein Einrichtungsventil (40), das in der Ausfahrphase offen ist.

9. Stoßfänger nach einem der vorstehenden Ansprüche, der mindestens ein erstes Einrichtungskompressionsventil (B) für Ölpassage von der unteren Kammer zu der oberen Kammer als Reaktion auf einen Öldruck in einer Kompressionsphase, der über einem vorbestimmten Schwellenwert liegt, umfasst, und mindestens ein zweites Einrichtungausfahrventil (E) für Ölpassage von der oberen Kammer zu der unteren Kammer als Reaktion auf einen Öldruck in der Ausfahrphase, der über einem vorbestimmten Schwellenwert liegt.

10. Stoßfänger nach Anspruch 9, wobei das erste und zweite Einrichtungsventil Reed-Ventile sind, die auf entgegengesetzte Flächen (30, 31) des Kolbens (1) zum Schließen jeweiliger Passagen (32, 33) montiert sind.

## Revendications

1. Amortisseur pour motocyclettes et bicyclettes, comprenant
un piston coulissant de manière étanche (1) dans un cylindre (5) rempli d'huile dans une course de compression contre la poussée de retour d'un ressort (2) et dans une course d'extension inverse pour ladite poussée de retour,
une tige de support de piston (8),
une première fixation extérieure (10) solidaire de la tige (8),
une deuxième fixation extérieure (11) solidaire du cylindre (5),
dans lequel la position dudit piston coulissant dans le cylindre définit une chambre supérieure (3) et une chambre inférieure (4) du cylindre,
des premiers moyens d'ajustement pour ajuster le passage d'huile à travers des premiers conduits de passage d'huile (6) entre la chambre supérieure et la chambre inférieure dans une course d'extension,
des deuxièmes moyens d'ajustement unidirectionnels agencés à l'intérieur du cylindre (5) et manoeuvrables de l'extérieur du cylindre (5) pour ajuster un passage d'huile à travers des deuxièmes conduits (13) de la chambre inférieure (4) à la chambre supérieure (3) dans une course de compression,
**caractérisé en ce qu'**il comprend des troisièmes moyens d'ajustement pour ajuster un passage d'huile de la chambre inférieure (4) à une chambre d'ajustement de compression (17) dans une course de compression, ladite chambre d'ajustement (17) étant agencée de manière concentrique sur ledit cylindre (5).

2. Amortisseur selon la revendication 1, dans lequel ladite chambre d'ajustement de compression est délimité au moins partiellement par une membrane élastique contenue (19) disposée à l'intérieur d'une chambre de compensation (20) chargée avec un gaz de pression réglable au moyen d'une vanne (29).

3. Amortisseur selon la revendication 1, dans lequel lesdits troisièmes moyens d'ajustement comprennent
un conduit (25) communiquant avec la chambre inférieure (4) et la chambre d'ajustement (17)
une goupille (C) mobile d'une manière réglable au moyen d'un bouton extérieur (26) pour ajuster une étendue de passage (27) du conduit (25).

4. Amortisseur selon l'une quelconque des revendications précédentes, comprenant au moins une vanne unidirectionnelle (D) agencée entre la chambre inférieure et la chambre d'ajustement, par exemple de type à clapet, pour un passage d'huile de la chambre inférieure à la chambre d'ajustement en réponse à une pression d'huile dans la phase de compression qui est au-dessus d'un seuil prédéterminé.

5. Amortisseur selon la revendication 4, dans lequel ladite vanne unidirectionnelle (D) est une vanne à clapet montée sur un fond de fermeture (34) du cylindre (5) pour fermer un passage (35) vers la chambre d'ajustement (17).

6. Amortisseur selon la revendication 1, dans lequel lesdits deuxièmes moyens d'ajustement comprennent une goupille (A) connectée à une queue (Q) disposée à l'intérieur de ladite tige (8) et normalement poussée dans la fermeture d'une ouverture (15) desdits deuxièmes conduits par un ressort, la goupille (A) étant mobile d'une amplitude réglable au moyen d'un dispositif de réglage accessible de l'extérieur (R) pour décaler axialement la queue (Q) et déterminer une surface de passage d'huile maximale à travers ladite ouverture (15) en réponse à une poussée reçue à partir de l'huile compressée dans une course de compression du piston.

7. Amortisseur selon la revendication 6, dans lequel les deuxièmes conduits (13) comprennent des trous radiaux (29) de la tige (8) communiquant avec ladite ouverture réglable (15) et avec des passages axiaux (O) agencés entre la tige (8) et le piston (1) et communiquant à leur tour avec la chambre supérieure (3).

8. Amortisseur selon l'une quelconque des revendications précédentes, dans lequel lesdits premiers conduits (6) comprennent
des trous circonférentiels (21) de la tige (8) agencés dans une position réglable par rapport à un premier espace (22) entre la tige (8) et un dispositif de réglage conique (23),
des premiers passages axiaux (24) agencés entre la queue et la tige de support de piston, communiquant à leur tour avec l'espace (22) et avec des premiers passages radiaux (N) communiquant avec la chambre supérieure (3),
des deuxièmes passages axiaux (O) agencés entre la tige de support de piston et le piston, communiquant avec la chambre supérieure (3) et des deuxièmes passages radiaux (P) communiquant avec la chambre inférieure (4), et dans lequel
lesdits premiers moyens d'ajustement comprennent un bouton (H) accessible de l'extérieur du cylindre (5), configuré pour déplacer une queue creuse (14) coulissant dans ladite tige de support de piston (8) et faisant varier la surface de passage d'huile à travers l'espace (22) et au moins une vanne unidirectionnelle (40) ouverte dans la phase d'extension.

9. Amortisseur selon une des revendications précédentes, comprenant au moins une première vanne de compression unidirectionnelle (B) pour un passage d'huile de la chambre inférieure à la chambre supérieure en réponse à une pression d'huile dans une phase de compression qui est au-dessus d'un seuil prédéterminé et au moins une deuxième vanne d'extension unidirectionnelle (E) pour un passage d'huile de la chambre supérieure à la chambre inférieure en réponse à une pression d'huile dans une phase d'extension qui est au-dessus d'un seuil prédéterminé.

10. Amortisseur selon la revendication 9, dans lequel lesdites première et deuxième vannes unidirectionnelles sont des vannes à clapet montées sur des faces opposées (30, 31) du piston (1) pour fermer des passages respectifs (32, 33).
